# EUROPÄISCHE PATENTANMELDUNG

(11) **EP 0 867 420 A2**
(43) Veröffentlichungstag der Anmeldung: **30.09.1998**
(21) Anmeldenummer: 98104876.2
(22) Anmeldetag: 18.03.1998
(51) Int. Cl.: C04B 28/18

(54) **Wärmedämmendes Mauerelement und Verfahren zu dessen Herstellung**

(30) Priorität: 29.03.1997 DE 19713292
(71) Anmelder: Veit Dennert KG Baustoffbetriebe, D-96130 Schlüsselfeld (DE)
(72) Erfinder: Dennert, Frank, 96120 Bischberg (DE); Dennert, Veit, Dr., 96120 Bischberg (DE)
(74) Vertreter: Hübner, Gerd, Dipl.-Phys.

(57) **Zusammenfassung**

Ein wärmedämmendes Mauerelement, insbesondere ein industriell vorgefertigter Großblockmauerstein besteht aus einer porösen Phase in Form eines porösen Leichtzuschlagstoffes oder Gasporen, die durch eine Bindemittelmatrix aus 30 bis 60% Kieselgur und 70 bis 40% einer aktiven Kalkkomponente fixiert wird.

Beim Herstellungsverfahren dieses Mauerelements wird die Kieselgur durch Beaufschlagung durch einen Brecher aufbereitet und mit der aktiven Kalkkomponente vermischt. In diese Bindemittelmatrix wird die poröse Phase eingebracht, durch Zugabe von Anmachwasser eine feuchte Ausgangsmischung gebildet, diese in entsprechende Formen eingefüllt und das somit gebildete Mauerelement wird unter hydrothermaler Aushärtung abgebunden.

## Beschreibung

Die Erfindung betrifft ein wärmedämmendes Mauerelement und insbesondere industriell vorgefertigte Großblockmauersteine, Außenwandplatten oder dergleichen.

Derartige Mauerelemente werden üblicherweise aus Trockenbestandteilen in Form eines granulatförmigen Leichtzuschlagstoffes als warmedämmende Komponente sowie einer Mischung aus Quarzmehl und einer Kalkkomponente zur Bildung einer die Festigkeit des Mauerelementes bringenden Bindemittelmatrix zwischen den Leichtzuschlagstoff-Partikeln hergestellt. Dabei werden die Trockenbestandteile unter Zugabe von Anmachwasser gemischt, diese feuchte Ausgangsmischung in entsprechende Formen gefüllt und die Formkörper mittels Sattdampf ausgehärtet, wobei es zu einer Kalzium-Hydrosilikat-Bindung kommt.

Die herkömmlicherweise verwendete Mischung von Quarzmehl und Kalkhydrat für die Bindemittelmatrix führt zu einem Mauerelement, das bezüglich seiner Wärmedämmwerte verbesserungsbedürftig ist. Quarzmehl ist nämlich ein kristalliner Stoff, der aufgrund seines inneren Gefüges unbefriedigende Wärmedämmwerte erbringt. Diese bringen einen nicht zu vernachlässigenden Wärmeleitungsanteil über die Bindemittelmatrix.

Zur Verbesserung der Wärmedämmfähigkeit von Mauerelementen schlägt die Erfindung nun vor, statt Quarzmehl zur Bildung der Bindemittelmatrix Kieselgur einzusetzen. Die Kieselgur ist ein amorpher Stoff, der aufgrund seiner inneren Struktur eine höhere Warmedämmfähigkeit mit sich bringt. Gleichzeitig bildet die Kieselgur mit der Kalkkomponente ein Bindemittelgerüst, wie es für die Herstellung von Mauerelementen geeignet ist.

Es wird dabei eine Bindemittelmatrix für die poröse Phase des Mauerelementes verwendet, die aus 30 bis 60 Masse-% Kieselgur und 70 bis 40 Masse-% einer aktiven Kalkkomponente besteht.

Die poröse Phase kann beispielsweise durch Luft- oder Gasporen gebildet sein, wobei jedoch einem porösen Leichtzuschlagstoff, wie z.B. einem Blähton-Granulat der Vorzug zu geben ist.

Als vorteilhafte Anteile der Trockenbestandteile haben sich bei Verwendung eines porösen Leichtzuschlagstoffes 40 bis 75 Masse-% dieses Leichtzuschlagstoffes (z.B. Blähton-Granulat) und 60 bis 25 Masse-% der Bindemittelmatrix herausgestellt.

Das Blähton-Granulat weist vorzugsweise eine Korngröße zwischen 4 und 8 mm auf, wobei zur Erhöhung der sogenannten 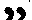 Grunstandsfestigkeit" ein Stützkornanteil einer Korngröße zwischen 0 und 4 mm von Vorteil ist.

Bei der aktiven Kalkkomponente kann es sich um Kalkhydrat oder Branntkalk handeln, wobei der Branntkalk noch den weiteren Vorteil hat, daß er beim Hinzumischen zur Kieselgur dieser einen Großteil der Feuchte entzieht. Branntkalk wandelt sich durch die Aufnahme von Kristallwasser aus der Kieselgur in Kalkhydrat um, wobei das Gemenge pulverförmig wird. Ferner wird durch die Exothermie dieser Reaktion der Trocknungsprozeß der Kieselgur unterstützt. Damit verbessert sich die Mischbarkeit der Kieselgur/Branntkalk-Mischung mit dem Blähton-Granulat und vereinfacht die Homogenisierung. Der Branntkalk ätzt beim 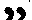 Ablöschen" ferner die Kieselgur-Oberfläche an, was zu einer stabileren Bindung dieser Bindemittel-Komponente mit den weiteren Mischungsbestandteilen und somit zu einer Festigkeitserhöhung führt..

Bezüglich der aktiven Kalkkomponente ist darauf hinzuweisen, daß für diese grundsätzlich auch Zement eingesetzt werden kann, der jedoch nur teilweise aus einer aktiven Kalkkomponente besteht. Daher muß seine Anteilsmenge an der Bindemittelmatrix entsprechend heraufgesetzt oder eine andere aktive Kalkkomponente ergänzend zugesetzt werden, - um gleichbleibende Festigkeit zu erreichen - oder es muß eine Einbuße in der Festigkeit des Mauerelementes hingenommen werden.

Die Erfindung bezieht sich ferner auf ein Verfahren zur Herstellung der vorgenannten Mauerelemente, das folgende Verfahrensschritte aufweist:
- Aufbereiten der Kieselgur in einem Brecher,
- Vermischen der Kieselgur mit der aktiven Kalkkomponente zur Bildung der Bindemittelmatrix,
- Einbringen der porösen Phase in die Bindemittelmatrix,
- Zugabe von Anmachwasser zur Bildung einer feuchten Ausgangsmischung,
- Formen der feuchten Ausgangsmischung zu einem Mauerelement,
   und
- hydrothermales Abbinden der Bindemittelmatrix in der feuchten Ausgangsmischung durch Autoklavierung.

Die Erfindung wird anhand der folgenden Beschreibung eines Ausführungsbeispiels näher erläutert.

Die Trockenbestandteile für die Herstellung der erfindungsgemäßen Mauerelemente, nämlich das Blähton-Granulat, die Kieselgur und Kalkhydrat bzw. Branntkalk werden in entsprechenden Silos bevorratet. Die Kieselgur wird aufbereitet, indem sie in einen sogenannten Kastenbeschicker aufgegeben wird und durch einen Brecher läuft. Dadurch werden Klumpen der Kieselgur, die teilweise trockenem Ton ähneln, aufgeschlossen und Verunreinigungen, wie beispielsweise Gesteinsbrocken oder ähnliche Fremdkörper praktisch pulverisiert. Die Kieselgur hat nach dem Aufbereitungsvorgang eine als flockenartig zu beschreibende Struktur und ist relativ klebrig, was ihre Weiterverarbeitung, d.h. ihre Förderung, exakte Dosierung und Zufuhr in Mischvorrichtungen erschwert. Verschärft wird dieses Problem durch starke Feuchtigkeitsunterschiede in der Kieselgur-Menge.

Um hier Abhilfe zu schaffen, wird der aufbereiteten Kieselgur in einem nachgelagerten Schritt in einem kleinvolumigen Vormischer Branntkalk hinzugemischt, der der Kieselgur einen Großteil der Feuchte durch Aufnahme von Kristallwasser und entsprechende Umsetzung von Branntkalk in Kalkhydrat entzieht. Dadurch wird die Kieselgur-Kalk-Mischung pulverförmig und trocken, was durch die Exothermie des Umwandlungsprozesses unterstützt wird. Ferner ist die Kalkkomponente ohnehin zur Bildung der Bindemittelmatrix für das Mauerelement notwendig, so daß durch die Zugabe von Branntkalk eine typische Doppelfunktion erfüllt wird.

Sofern man die vorstehend erörterten Probleme bei der Verarbeitbarkeit der Kieselgur durch entsprechende Auslegung der Herstellungsanlage in den Griff bekommt, kann statt Branntkalk auch Kalkhydrat zugegeben werden.

Schließlich wird die Kieselgur-Kalk-Mischung mit dem Blähton-Granulat vermischt und Anmachwasser zur Bildung einer feuchten Ausgangsmischung zugegeben. Letztere wird in entsprechende Formen eingefüllt und bindet unter hydrothermaler Aushärtung in einem Autoklaven ab.

Das vorstehende Zusammenmischen der einzelnen Komponenten erfolgt beispielhaft mit einer folgenden Rezeptur, mit der 1 m³ feuchte Ausgangsmischung hergestellt werden kann:
- 100 kg Kieselgur
- 80 kg Branntkalk oder 100 kg Kalkhydrat
- 1.000 Liter Blähton mit Korngröße 0 bis 8 mm
- 100 Liter Wasser.

Die Wärmeleitzahl eines auf Basis dieser Rezeptur hergestellten Mauerelementes beträgt 0,14 W/m²K bei einer Trockenrohdichte von 400 kg/m³, was eine Verbesserung gegenüber den herkömmlichen Mauerelementen mit Quarzmehl in der Bindemittelmatrix von ca. 12 % bedeutet.

## Patentansprüche

1. Wärmedämmendes Mauerelement, insbesondere industriell vorgefertigter Großblockmauerstein, Außenwandplatte oder dergleichen, bestehend aus einer porösen Phase in einer Bindemittelmatrix, die folgende Trockenbestandteile bezogen auf ihre Gesamt-Trockenmenge aufweist:
- 30 bis 60% Kieselgur
- 70 bis 40% einer aktiven Kalkkomponente.

2. Mauerelement nach Anspruch 1, **dadurch gekennzeichnet, daß** es aus folgenden Trockenbestandteilen bezogen auf die Gesamt-Trockenmenge unter Zugabe von Anmachwasser hergestellt ist:
- 40 bis 75 Masse-% eines porösen Leichtzuschlagstoffes
- 60 bis 25 Masse-% der Bindemittelmatrix.

3. Mauerelement nach Anspruch 1, **dadurch gekennzeichnet, daß es** Luftporen als poröse Phase aufweist.

4. Mauerelement nach Anspruch 1 oder 2, **dadurch gekennzeichnet, daß** der Leichtzuschlagstoff eine Korngröße zwischen 4 und 8 mm ist..

5. Mauerelement nach Anspruch 4, **dadurch gekennzeichnet, daß** ein Teil des Blähton-Granulats als Stützkorn eine Korngröße zwischen 0 und 4 mm aufweist.

6. Mauerelement nach einem der Ansprüche 1 bis 5, **dadurch gekennzeichnet, daß** die aktive Kalkkomponente Kalkhydrat ist.

7. Mauerelement nach einem der Ansprüche 1 bis 5, **dadurch gekennzeichnet, daß** die aktive Kalkkomponente Branntkalk ist.

8. Mauerelement nach einem der Ansprüche 1 bis 5, **dadurch gekennzeichnet, daß** die aktive Kalkkomponente teilweise oder ganz aus Zement besteht.

9. Mauerelement nach einem der Ansprüche 1 bis 7, **gekennzeichnet durch** folgende Rezeptur bezogen auf 1 m³ feuchte Ausgangsmischung:
- ca. 100 kg Kieselgur
- ca. 100 kg Kalkhydrat oder 80 kg Branntkalk
- ca. 1000 Liter Blähton mit Korngröße 0 bis 8 mm
- ca. 100 Liter Wasser.

10. Verfahren zur Herstellung eines Mauerelementes mit einer Zusammensetzung nach einem der Ansprüche 1 bis 9 mit folgenden Verfahrensschritten:
- Aufbereiten der Kieselgur in einem Brecher,
- Vermischen der Kieselgur mit der aktiven Kalkkomponente zur Bildung der Bindemittelmatrix,
- Einbringen der porösen Phase in die Bindemittelmatrix,
- Zugabe von Anmachwasser zur Bildung einer feuchten Ausgangsmischung,
- Formen der feuchten Ausgangsmischung zu einem Mauerelement, und
- hydrothermales Abbinden der Bindemittelmatrix in der feuchten Ausgangsmischung durch Autoklavierung.

11. Verfahren nach Anspruch 10, **dadurch gekennzeichnet, daß** die poröse Phase durch Vermischen der Bindemittelmatrix mit einem porösen Leichtzuschlagstoff, insbesondere Blähton-Granulat eingebracht wird.

12. Verfahren nach Anspruch 10 oder 11, **dadurch gekennzeichnet, daß** der aufbereiteten Kieselgur in einem Vormischer Branntkalk als Kalkkomponente zum Feuchtigkeitsentzug und zur Pulverisierung der Kieselgur zugemischt wird.

13. Verfahren nach einem der Ansprüche 10 bis 12, **dadurch gekennzeichnet, daß** Anmachwasser mit einem Volumenanteil von ca. 10 % an der feuchten Ausgangsmischung zugegeben wird.
